# EUROPEAN PATENT APPLICATION

(11) **EP 1 437 531 A2**
(43) Date of publication of application: **14.07.2004**
(21) Application number: 04000421.0
(22) Date of filing: 12.01.2004
(51) Int. Cl.: F16H 57/08

(54) **Method for production of a housing for a speed reducer, in particular an epicyclic reducer, and housing obtained by this method**

(30) Priority: 13.01.2003 IT BO20030011
(71) Applicant: Tecnoingranaggi Riduttori S.r.l., 40017 S. Giovanni in Persiceto (Bologna) (IT)
(72) Inventor: Bergonzoni, Giuliano, 40012 Calderara di Reno (Bologna) (IT)
(74) Representative: Dall'Olio, Giancarlo

(57) **Abstract**

According to the proposed method, three consecutive cylindrical coaxial seats (11, 12, 13) are machined inside the body (10) of the housing (1). A ring (5), toothed internally and ground externally, is introduced with interference and fastened into the body (10), in a region corresponding to the intermediate seat (12); the remaining seats (11, 13) are aimed at receiving bearings of the speed reducer. The gears of the speed reducer include planetary gears, which mesh with the internal toothing of the ring (5). In this way, a perfect centering of the ring (5) and the bearings with respect to the body (10) is ensured, and it is possible to mount rings (5) with different toothings in the same body (10), in order to obtain housings (1) fitted for speed reducers with different characteristics.

## Description

The present invention relates to the manufacturing of epicyclic speed reducers, in particular small reducers, connected to brushless electrical motors or step electrical motors.

As it is known, groups formed by motors and a reducers are often used in the manufacturing of automatic machines, and in general, in all those situations in which it is necessary to operate mechanisms with high movement precision.

Thus, the characteristics of speed reducers must fit those of the motors to which they are connected, and consequently, they must be manufactured with accurate processing and very small tolerance, so as to obtain precise couplings almost without clearance.

In the above mentioned epicyclic reducers, the housing is usually tubular and features inside a toothing meshing with planetary gears as well as the seats for the bearings supporting the input and output shafts.

The toothing is situated between the seats for the bearings and their reciprocal coaxial relation must be highly precise, since the centering of the gears depends on it.

Those skilled in the lathe working and mechanical processes know that if the working cycle includes removing the workpiece from the tool machine, various working processes could be performed in non-coaxial relation.

Currently, in order to respect allowed position tolerances, working of the inside of the reducer housing is performed as specified below:
- thermal treatment (quench + tempering) of the workpiece;
- machining of the part destined to be toothed until it reaches the required dimension;
- machining of the seats for the bearings, leaving a suitable metal over-layer;
- making the teeth by broaching;
- applying a peg to the workpiece into the toothing, in order to obtain a reference with respect to the central axis of the toothing;
- mounting of the peg-workpiece assembly on the tool machine, with the grip performed on the peg, and finishing of a seat for bearings by grinding;
- turning of the workpiece (and possibly the peg) and grinding of the seat on the opposite side.

The above working cycle is complicated and causes a series of disadvantages, first of all due to the fact that the whole housing undergoes a thermal treatment, although the toothing is the only part that requires such thermal treatment.

Since the costs due to the thermal treatment depend on the dimension of workpiece, it is obvious that the thermal treatment of the whole housing is in fact a waste.

Another drawback derives from the fact that the characteristics of the housing toothing (diameter, number of teeth) make it suitable only for one type of speed reducer with a prefixed reduction ratio.

In speed reducers with two or more stages, that is those speed reducers including two epicyclical mechanisms in cascade, the housing toothing characteristics must be identical between one stage and another, due to obvious reasons connected to the broaching process, whose tool moves straight along the toothing axis.

This constitutes a bar to possible reduction ratios and, consequently, to the possibility to easily diversify the characteristics of the speed reducers in order to adapt them to the application needs.

Normally, a producer of speed reducers has a certain range of models and thus it is necessary to prepare a corresponding number of different housings, some of which differ from each other only by the toothing characteristics.

In a series production framework, according to which each piece is produced in lots, a great number of elements are stored in a magazine, which considerably increases the costs.

A further disadvantage results from the fact that when required production precision is high, the possibility to have production refuses increases, and the more complicated and expensive is the piece to be rejected, the higher are the costs due to production refuses.

Therefore, the object of the present invention is to propose a method for manufacturing housings for epicyclic speed reducers, which avoids the above mentioned disadvantages, simplifying the working cycle and reducing the costs, all this ensuring best respect for the given tolerances.

Another object of the present invention is to propose a method for producing housings with higher use versatility, that is housings which are compatible with more models of speed reducers, so as to unify the element and reduce the number of single components stored in the magazine.

The above mentioned objects are achieved by the features of the independent claims, while preferred features are defined in the dependent claims.

The invention will now be described in more detail with reference to particular, non-limiting embodiments and with reference to the accompanying drawings, in which:
- Figure 1A is a longitudinal section view of the housing body, and a first toothed ring aimed at being introduced in the housing body;
- Figure 1B is a view similar to the view of Figure 1A, with a second ring having a different toothing;
- Figure 2A shows a first housing obtained by introducing. of a first ring in the body;
- Figure 2B shows a second housing obtained by introducing of a second ring in the body;
- Figure 3 shows a third housing, for a two stage speed reducer, in which two rings are introduced into a suitably extended body.

With reference to the above Figures, the reference numeral 10 indicates the body of a housing for an epicyclic speed reducer of known type, aimed at being coupled for example to a brushless motor or to a step electric motor, not shown.

The housing has a tubular shape and houses, in its inside, the speed reducer gears and the bearings supporting the input and output shafts, in the regions of corresponding seats.

The housing must be provided with an inner toothing, integral therewith and situated between the bearings seats.

The planetary gears, being a part of the mechanism, are aimed at meshing with the toothing.

The whole speed reducer has not been illustrated, as not significant for the invention scope.

The method for production of the housing is described, considering that the body 10 has already been machined externally to define its diameter and length.

The method includes:
- internal lathe working of the housing body 10, so as to obtain, fitting the workpiece only once on the machine, three consecutive coaxial cylindrical seats 11, 12, 13, with decreasing diameter with respect to a free head 10a of the body 10, through which the tool is introduced, with the two terminal cylindrical seats 11, 13 being aimed at receiving the bearings;
- external and internal machining of a ring 5 of tempered steel, so that the diameter of its outer cylindrical surface 5a is increased by a suitable metal over-layer with respect to the diameter S of the intermediate cylindrical seat 12 made in the body 10, and with the inner diameter of the same ring 5 corresponding to the addendum circle diameter of a selected inner toothing 50;
- inner broaching of the ring 5, in order to obtain the selected inner toothing 50;
- setting the ring 5 on a peg (of known type, not shown), having its outer toothing complementary to the ring inner toothing 50, so that the peg is coaxial with the inner toothing 50;
- mounting of the peg-ring assembly on a grinding machine, with the grip performed on the peg of the assembly;
- grinding of the external cylindrical surface 5a of the ring 5, so that it is coaxial with the relative inner toothing 50 and so that a diameter A of the external cylindrical surface 5a is bigger than the diameter S of the intermediate cylindrical seat 12 of the body 10 by a selected entity in hundredth of millimeters;
- removal of the ring 5 from the peg;
- interference mounting of the ring 5 in the intermediate cylindrical seat 12 of the body 10, with the interference being calibrated to obtain a mutual fastening between the ring 5 and the body 10, sufficient to resist to a prefixed torque moment applied to the ring 5.

In order to facilitate the last operation, the extremities of the external cylindrical surface 5a of the ring 5 are provided with entrance guiding splays 15, made during the outer machining.

The splays 15 are not necessary, if there is a conical entrance section between the first seat 11 (i.e. the one of the biggest diameter) and the intermediate seat 12 of the body 10, or if the interference mounting is performed at different temperatures, to expand the body and to contract the ring.

The just described method allows to obtain a housing fulfilling the required characteristics, that is a housing:
- equipped with an inner toothing 50, situated substantially in the middle of the body 10 length, integral with the latter and aimed at engaging with the planetary gears;
- equipped with two seats for bearings 11, 13 situated at both sides of the inner toothing 50, coaxial with the latter with the precision required by the prefixed position tolerance.

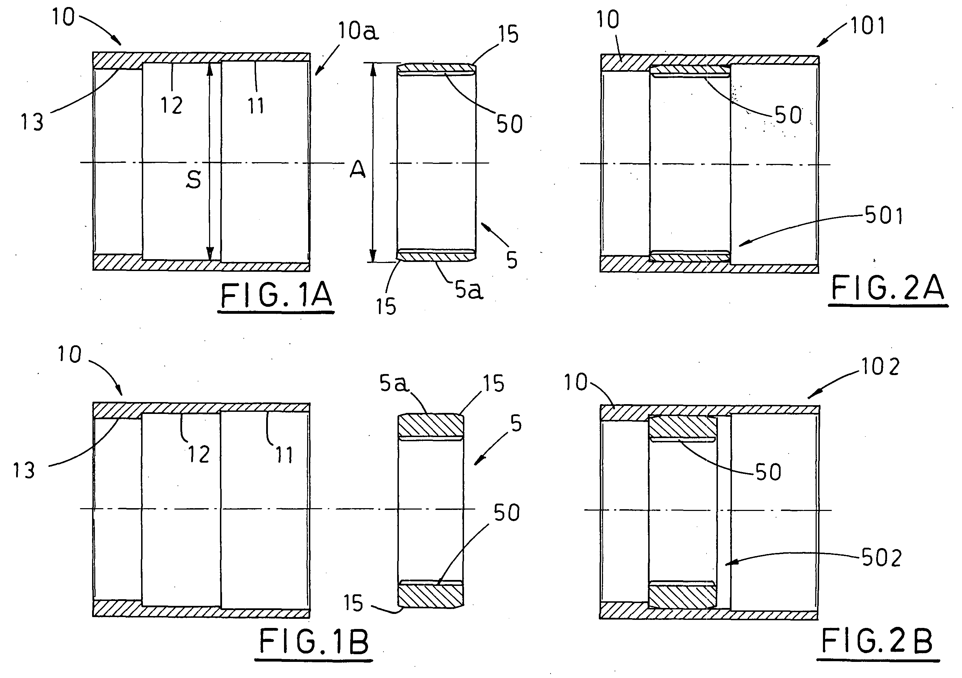

Using the body 10, it is possible to obtain a first housing 101 by introducing a first ring 501 having a certain number of teeth (Figures 1A, 2A), or a second housing 102 by introducing a second ring 502 having a different number of teeth (Figures 1B, 2B).

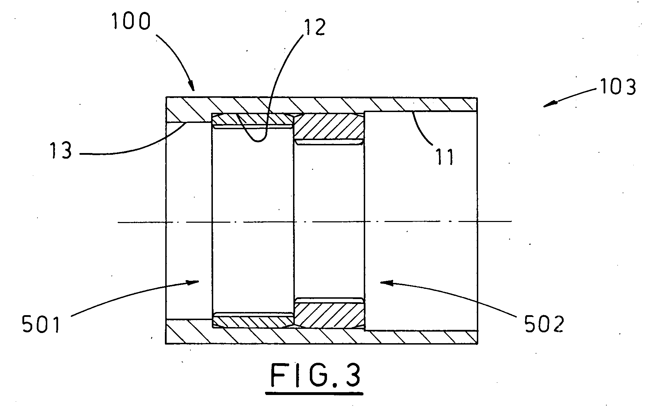

By manufacturing a suitably extended body 100, it is possible to obtain a third housing 103 for a two-stage speed reducer, by introducing two rings, set close to each other, in the intermediate seat; for a not limiting example, the rings can be said first ring 501 and said second ring 502 (Figure 3);

The proposed method offers the following advantages:
- only one toothed ring 5 is thermally treated, instead of the whole body 10, which results in a considerable reduction of costs;
- the coaxial relation of the three consecutive cylindrical seats 11, 12, 13 is ensured, since they are all obtained without removing the piece;
- saving due to the lack of grinding of the seats 11, 13 for the bearings;
- simpler, cheaper, and at the same time more precise working,
- minor production of refusals and lower unit cost of each refusal;
- possibility to associate rings with different toothings to the same body, so as to obtain one-stage speed reducers with different characteristics, using the same components, which results in the costs reduction;
- possibility to produce two-stage speed reducers, in which the toothings on the housing are not necessarily identical to each other, but they can be different, to obtain a wider range of possible reduction ratios;
- lower number of pieces stored in a magazine.

The above mentioned advantages do not affect the housing reliability, since the interference mounting between the body and ring has been calibrated in such a way, as to ensure a very safe mutual fastening, in connection with the applied torque values.

## Claims

1. Method for production of a housing for speed reducer, in particular an epicyclic speed reducer, **characterized in that** it includes:
- internal machining of the housing body (10, 100), so as to obtain, fitting the workpiece 'only once on the machine, three consecutive coaxial cylindrical seats (11, 12, 13), with the two terminal cylindrical seats (11, 13) being aimed at receiving the bearings supporting the shafts and the gears of the speed reducer;
- external and internal machining of a ring (5), so that the diameter of its outer cylindrical surface (5a) results increased by a suitable metal over-layer with respect to the diameter (S) of the intermediate cylindrical seat (12) made in the body (10, 100), and with the inner diameter of the same ring (5) corresponding to the addendum circle diameter of a selected inner toothing (50);
- inner broaching of the ring (5), in order to obtain the selected inner toothing (50);
- setting the ring (5) on a peg having its outer toothing complementary to said ring inner toothing (50), so that the peg is coaxial with the inner toothing (50);
- mounting of the peg-ring assembly on a grinding machine, with the grip performed on the peg of the assembly;
- grinding of the external cylindrical surface (5a) of said ring (5), so that it is coaxial with the relative inner toothing (50) and so that a diameter (A) of said external cylindrical surface (5a) is bigger than the diameter (S) of said intermediate cylindrical seat (12) of the body (10, 100) by a selected entity in hundredth of millimeters;
- removal of the ring (5) from the peg;
- interference mounting of said ring (5) in the intermediate cylindrical (12) of the body (10, 100), to obtain said housing, with said interference being calibrated to obtain a mutual fastening between the ring (5) and the body (10, 100), sufficient to resist to a prefixed torque moment applied to the ring (5).

2. Method according to claim 1, **characterized in that** it includes a thermal treatment of said ring (5), performed before said external and internal machining thereof.

3. Method according to claim 1, **characterized in that** during said external machining of the ring (5), entrance splays (15) are made at the ends of said external cylindrical surface (5a) of the ring (5), with said splay (15) being aimed at facilitating mounting of the ring (5) in the intermediate cylindrical seat (12).

4. Method according to claim 1, **characterized in that** during said internal machining of the body (10, 100), a conical entrance section is made between the cylindrical section (11) of the biggest diameter and said intermediate cylindrical seat (12), with said conical entrance section being aimed at facilitating mounting of the ring (5) in'the intermediate cylindrical seat (12).

5. Method according to claim 1, **characterized in that** the interference mounting of said ring (5) in the intermediate cylindrical seat (12) is performed at different temperatures, to expand the body and to retract the ring.

6. Method according to claim 1, **characterized in that** rings (5) have the respective external cylindrical surface (5a) of the same diameter and the relative internal toothings (50) have different diameter and number of teeth.

7. Method according to claim 1, **characterized in that** two rings 5, set close to each other, are mounted with interference in the intermediate cylindrical seat (12) of a suitably extended body (100), to obtain a third housing (103) for a two-stage speed reducer.

8. Method according to claim 7, **characterized in that** two rings (5) having the same internal toothings (50) are mounted.

9. Method according to claim 7, **characterized in that** two rings (501, 502) having different internal toothings (50) are mounted.

10. Housing for a speed reducer, in particular an epicyclic speed reducer, **characterized in that** it includes: a body (10, 100), with three consecutive cylindrical coaxial seats (11, 12, 13) made therein, for receiving respective bearings for supporting the shafts and gears of the speed reducer; at least one ring (5), having an internal toothing (50) made coaxial with the external cylindrical surface (5a) of the ring (5), with said external cylindrical surface (5a) being coupled with interference within the intermediate cylindrical seat (12) between the two ends thereof and with said internal toothing (50) meshing with planetary gears of the speed reducer.

11. Housing according to claim 10, **characterized in that** said ring (5) is made of steel, previously subjected to thermal treatment.

12. Housing according to claim 10, **characterized in that** entrance splays (15) are made in said ring (5), at the ends of said external cylindrical surface (5a), with said splays (15) being aimed at facilitating mounting of the ring (5) in said intermediate cylindrical seat (12). of the ring (5) in said intermediate cylindrical seat (12).

13. Housing according to claim 10, **characterized in that** it includes a conical entrance section made between said cylindrical seat (11) of the biggest diameter and said intermediate cylindrical seat (12), with said conical entrance section being aimed at facilitating mounting of the ring (5) in said intermediate cylindrical seat (12). of the ring (5) in said intermediate cylindrical seat (12).

14. Housing according to claim 10, **characterized in that** it includes a suitably extended body (100), in which said intermediate cylindrical seat (12) is aimed at receiving two rings (5), set close to each other, with said housing (103) being suitable for a two-stage speed reducer.

15. Housing according to claim 14, **characterized in that** said two rings (5) have identical internal toothings (50).

16. Housing according to claim 14, **characterized in that** said two rings (501, 502) have different internal toothings (50).
